# EUROPÄISCHE PATENTANMELDUNG

(11) **EP 3 321 637 A1**
(43) Veröffentlichungstag der Anmeldung: **16.05.2018**
(21) Anmeldenummer: 17200956.5
(22) Anmeldetag: 10.11.2017
(51) Int. Cl.: G01D 4/00, H02B 1/52

(54) **BAUSTELLENKASTEN**

(30) Priorität: 11.11.2016 DE 102016121682; 27.04.2017 DE 102017109035
(71) Anmelder: Gilli, Christian, 79115 Freiburg (DE)
(72) Erfinder: Gilli, Christian, 79115 Freiburg (DE)
(74) Vertreter: Patentanwälte und Rechtsanwalt Weiß, Arat & Partner mbB

(57) **Zusammenfassung**

Die Erfindung betrifft einen Baustellenkasten (1) zur Erfassung einer verbrauchten Menge an Strom- oder Wasser mit einem Anschluss für eine Versorgungsleitung (6) und einer Entnahmeleitung (7), wobei ein fest integrierter Zähler (2) und ein Kommunikationsmodul (3) vorhanden sind.

## Beschreibung

### Technisches Gebiet

Die Erfindung betrifft einen Baustellenkasten sowie ein Verfahren zur Erfassung einer Menge eines aus einer Leitung entnommenen Versorgungsgutes nach dem Oberbegriff der unabhängigen Ansprüche.

### Stand der Technik

Baustellenkästen sind aus dem Stand der Technik bekannt. Sie kommen beispielsweise als Baustromzähler und Bauwasserzähler zum Einsatz. Ausser in einer Bauphase eines Gebäudes oder dergleichen werden derartige Baustellenkästen bei zahlreichen temporären Projekten wie Wochenmärkten, Jahrmärkten oder Veranstaltungen eingesetzt, bei denen beispielsweise Strom und Wasser benötigt wird aber entsprechende Hausanschlüsse nicht vorhanden oder noch nicht in Betrieb genommen sind.

Baustrom- und Bauwasseranschlüsse werden meist für Zeiträume von einigen Stunden bis hin zu etwa einem Jahr betrieben bzw. benutzt.

Die DE 10 2012 102 742 A1 beschreibt einen sogenannten Baustromverteiler, in welchem ein Baustromzähler angeordnet ist. Baustromverteiler sind aus dem Stand der Technik hinreichend bekannt. Im Rahmen der vorliegenden Erfindung sind unter Baustromverteilern beispielsweise Anschlussverteilerschränke, Anschlussschränke sowie kombinierte Anschluss- und Anschlussverteilerschränke zu verstehen. Weiterhin können es Wandlerschränke wie auch Vollgummiverteiler sein.

Um eine Baustelle mit elektrischer Energie zu versorgen, wird meist ein solcher Baustromverteiler aufgestellt. Dieser beherbergt Anschlüsse, VerteilerEinrichtungen wie beispielsweise Steckdosen, Sicherungen, Schalter und Hauptschalter und dergleichen, sowie den Baustromzähler. Falls Ströme mit hoher Stromstärke durch den Baustromverteiler geleitet und vom Baustromzähler gemessen werden sollen, können Wandler im Baustromverteiler angeordnet sein. Derartige können die Stromstärke auf einen für den Baustromzähler verwertbaren Wert umwandeln.

Der Baustromverteiler ist somit ein Bindeglied zwischen einem Stromnetz und der mit Strom zu versorgenden Baustelle. Bevor die Baustelle mit Strom versorgt werden kann, muss meist ein Elektrizitäts-Versorgungsunternehmen (EVU) den Baustromverteiler aufstellen, den Baustromzähler einbauen, anschliessen und verplomben. Falls geltende Vorschriften oder andere Umstände den Einsatz eines Anschlussschrankes und eines Anschlussverteilerschrankes erfordern, müssen an Stelle nur eines Baustromverteilers beide vorgenannten Schränke aufgestellt werden.

Die DE 201 13 627 U1 beschreibt eine Bauwasserentnahmevorrichtung, welche einen Bauwasserzähler umfasst, der auf einfache Weise montiert und demontiert werden kann und der einfach abzulesen ist.

Sowohl Stromzähler als auch andere Zähler werden teilweise als Messstelle bezeichnet. Entsprechend wird ein Dienstleister, welcher die Messstelle installiert, in Betrieb nimmt, für ihre technische Beschaffenheit garantiert und sie somit betreibt als Messstellenbetreiber bezeichnet. Obwohl der Messstellenbetreiber neben dem Betrieb der Messstelle ein Ablesen, insbesondere ein Ablesen eines Zählerstandes durch eine Person oder ein Auslesen, beispielsweise mittels elektronischer Geräte anbieten kann, ist es auch möglich, dass diese Dienstleistung von einem Messdienstleister erbracht wird. Dem Messdienstleister kann auch die Abrechnung eines Verbrauchs gegenüber einem Anschlussnehmer, beispielsweise dem Bauherrn, obliegen.

Der Messstellenbetreiber und/oder der Messdientleister können mit Stromanbietern kooperieren. Ferner kann auch ein einziges Dienstleistungsunternehmen als Messstellenbetreiber und/oder Messdienstleister und/oder Stromanbieter auftreten.

### Aufgabe der Erfindung

Die vorliegende Erfindung hat es sich zur Aufgabe gesetzt, sämtliche mit der Inbetriebnahme und der Nutzung des Baustellenkastens zusammenhängenden Arbeiten und Aufgaben zu vereinfachen.

### Lösung der Aufgabe

Zur Lösung der Aufgabe führen die Merkmale nach dem Anspruch 1. Vorteilhafte Ausgestaltungen sind in den Unteransprüchen beschrieben.

Die vorliegende Erfindung schlägt einen Baustellenkasten zur Erfassung einer Menge eines aus einer Leitung entnommenen Versorgungsgutes wie beispielsweise Strom oder Wasser vor, wobei der Baustellenkasten geeignet ist, über einen längeren Zeitraum reversibel an einem Standort installiert zu werden und wobei der Baustellenkasten eine Schnittstelle zur Anbindung einer Einrichtung zur Ortsbestimmung zur Bestimmung eines Standortes des Baustellenkastens umfasst. Es kann hierbei beispielsweise an einen Zeitraum von zumindest einem Jahr oder an einen Zeitraum von bis zu zwei Jahren gedacht sein.

Ein solcher Baustellenkasten verfügt vorzugsweise über eine Zähleinrichtung zur Erfassung der Menge des entnommenen Versorgungsgutes. Dies ist hier in Form des Zählers gegeben.

Als Schnittstelle zur Anbindung einer Einrichtung zur Ortsbestimmung kommen sämtliche Schnittstellen in Betracht, welche drahtlos oder durch physischen Kontakt eine Übertragung von Daten zwischen der Baustellenkasteneinrichtung des Baustellenkastens und der Einrichtung zur Ortsbestimmung ermöglichen.

Als Schnittstelle zur Anbindung einer Einrichtung zur Ortsbestimmung kommt beispielsweise ein Bluetooth-Modul, ein WLAN-Modul, ein Infrarot-Modul oder dergleichen in Betracht. Weiterhin kommen eine LAN-Schnittstelle oder eine USB-Schnittstelle in Betracht.

Bei dem im Rahmen der vorliegenden Erfindung beschriebenen Baustellenkasten kann es sich um einen mobilen Baustellenkasten handeln. Der mobile Baustellenkasten, insbesondere der mobile Baustromzähler kann einen aus dem Stand der Technik bekannten Baustromzähler ersetzen und ist hierbei kompatibel mit den vorstehend beschriebenen bekannten Baustromverteilern sowie den zugehörigen Komponenten. Der mobile Baustromzähler kann als separates Teil gehandhabt oder dauerhaft in einem Baustromverteiler installiert sein.

Von der vorliegenden Erfindung werden einerseits Baustellenkasten mit integrierter oder dauerhaft angebundener Einrichtung zur Ortsbestimmung umfasst. Ferner werden andererseits auch solche Baustellenkasten umfasst, welche lediglich über eine Schnittstelle zur Anbindung einer Einrichtung zur Ortsbestimmung verfügen und nicht zwingend dauerhaft mit dieser verbunden sind.

Die vorgenannten Einrichtungen können also einstückig ausgeführt und beispielsweise in demselben Gehäuse angeordnet sein. Ferner kann daran gedacht sein, dass die vorgenannten Einrichtungen als zwei separate Bauteile ausgebildet sind, welche gemeinsam, gegebenenfalls mit weiteren Bauteilen und Einrichtungen, den Baustellenkasten bilden.

Die Einrichtung zur Ortsbestimmung kann eingerichtet sein, die Bestimmung des Standorts des Baustellenkastens auf zumindest eine der folgenden Arten zu ermöglichen:
- Bestimmung mittels mehrerer verteilter Empfänger, deren Standort bekannt ist, beispielsweise Mobilfunkmasten eines Mobilfunknetzes,
- Bestimmung über Trilateration, beispielsweise durch ein Satellitensystem zur Positionsbestimmung.

Die Bestimmung des Standortes mittels Mobilfunkmasten eines Mobilfunknetzes kann auf dieselbe Weise erfolgen wie bei einer Bestimmung eines Standortes eines Mobiltelefons, welches in dem Mobilfunknetz eingewählt ist. Diese Ortung bzw. Standortbestimmung wird auch als GSM-Ortung bezeichnet. Da die Standorte der Mobilfunkmasten bekannt sind und festgestellt werden kann, ob das Mobiltelefon sich in einem Sendebereich eines bestimmten Mobilfunkmastes befindet, kann der Standort des Mobiltelefons auf einfache Weise bestimmt werden, indem er im Wesentlichen mit dem Standort des Mobilfunkmastes gleichgesetzt wird. Je mehr Mobilfunkmasten pro Fläche vorhanden sind, desto genauer wird die Standortbestimmung. Liegt eine Überlappung von Sendebereichen mehrere benachbarter Mobilfunkmasten vor, so können auch mehrere Mobilfunkmasten zur Standortbestimmung genutzt werden. Dies erhöht eine Genauigkeit der Standortbestimmung.

Um eine solche Standortbestimmung durchzuführen, kann es sich bei der Einrichtung zur Ortsbestimmung zweckmässigerweise um einen Sendeempfänger, auch Funkteil oder Antenne genannt, handeln.

Die Bestimmung des Standortes über Trilateration kann auf dieselbe Weise erfolgen, wie sie bereits bei bekannten Satelliten-Navigationssystemen, beispielsweise dem GPS-System, zur Anwendung kommt. Vorzugsweise kann die Einrichtung zur Ortsbestimmung mit einem GPS-Empfänger ausgestattet sein.

Es kann sowohl daran gedacht sein, den Standort ausschliesslich über Trilateration oder ausschliesslich über verteilte Empfänger zu bestimmen. Weiterhin kann jedoch auch daran gedacht sein, den Standort mittels beider Methoden zugleich zu bestimmen, um eine höhere Genauigkeit, einen Ausfallschutz oder einen Schutz vor Manipulationen oder Fehlern zu gewährleisten.

Ist der Baustellenkasten nicht dauerhaft mit der Einrichtung zur Ortsbestimmung verbunden, so kommen zahlreiche Einrichtungen als Einrichtung zur Ortsbestimmung in Betracht. Beispielsweise kann auch an ein Mobiltelefon, beispielsweise ein Smartphone, gedacht sein, welches zwecks Ortsbestimmung über die Schnittstelle zur Anbindung für einen kurzen Zeitraum mit dem Baustellenkasten verbunden wird. Zweckmässigerweise kann hierfür eine auf dem Mobiltelefon oder Smartphone zu installierende Applikation (App) vorgesehen sein, so dass jedes beliebige Mobiltelefon oder Smartphone nach Installation der Applikation als Einrichtung zur Ortsbestimmung genutzt werden kann.

Der vorstehend beschriebene Baustellenkasten kann auf beliebige Arten ausgelesen werden. Hierbei kann einerseits an ein manuelles Auslesen gedacht sein, indem eine Person beispielsweise einen Zählerstand abliest. Zweckmässigerweise ist hierfür ein Display oder dergleichen vorgesehen. Ferner kann an ein elektronisches Auslesen gedacht sein, wobei eine Bedienperson beispielsweise den Zählerstand in geeigneter Weise über eine geeignete Schnittstelle für ein elektronisches Auslesen ausliest.

Der vorstehend dargestellte Baustellenkasten kann mit einer solchen Schnittstelle für ein elektronisches Auslesen ausgestattet sein. Dabei handelt es sich im Rahmen der Erfindung um ein Kommunikationsmodul. Ferner wird für einen Baustellenkasten mit einer solchen Schnittstelle für ein elektronisches Auslesen separat Schutz begehrt.

Die vorliegende Erfindung schlägt daher ferner einen Zähler zur Erfassung einer Menge eines aus einer Leitung entnommenen Versorgungsgutes wie beispielsweise Strom oder Wasser vor, wobei der Baustellenkasten geeignet ist, über einen längeren Zeitraum reversibel an einem Standort installiert zu werden und wobei der Zähler eine Schnittstelle für ein elektronisches Auslesen umfasst, welche ein elektronisches Auslesen der entnommenen Menge des Versorgungsgutes erlaubt. Es kann hierbei beispielsweise an einen Zeitraum von zumindest einem Jahr oder an einen Zeitraum von bis zu zwei Jahren gedacht sein.

Hierbei kann an sämtliche bekannte Schnittstellen für ein elektronisches Auslesen gedacht sein. Es kommen sämtliche Einrichtungen als Schnittstelle für ein elektronisches Auslesen in Betracht, die drahtlos oder durch physischen Kontakt eine Übertragung von Daten, insbesondere ein Auslesen von Daten des Zählers, ermöglichen. Beispielsweise kann der Zähler hierzu ein Bluetooth-Modul, ein WLAN-Modul, ein Infrarot-Modul oder dergleichen umfassen. Weiterhin kommen eine LAN-Schnittstelle oder eine Schnittstelle zur Datenübertragung über ein Stromnetz, über Glasfaserleitungen oder über andere Leitungen und Netze in Betracht. Ferner kann, insbesondere falls ein nachstehend beschriebenes Fernauslesen erfolgen soll, an eine Gateway-Schnittstelle sowie an eine GSM-Schnittstelle gedacht sein.

Die Schnittstelle für ein elektronisches Auslesen kann eingerichtet sein, um ein Fernauslesen der entnommenen Menge des Versorgungsgutes zu erlauben.

Unter Fernauslesen wird hierbei vorzugsweise ein Auslesen verstanden, bei dem sich eine auslesende Person bzw. eine auslesende Stelle in einer Entfernung von mehreren Kilometern, vorzugsweise in beliebiger Entfernung von dem Zähler befindet.

Ein solches Fernauslesen kann mit Hilfe beliebiger Verfahren zur Datenübertragung erfolgen. Entsprechende Daten können beispielsweise über das Mobilfunknetz übertragen werden. Das zur Fernauslesung genutzte Mobilfunknetz kann mit beliebigen Mobilfunkstandards arbeiten. Beispielsweise kommen GSM, UMTS, 3G, 4G und dergleichen in Betracht. Alternativ kann auch daran gedacht sein, ein mit dem Zähler kommunizierendes Gateway vorzusehen, welches beispielsweise den vom Zähler gemessenen Verbrauch speichern, daraus abgeleitete Daten verarbeiten und mit einem Netzwerk kommunizieren kann. Wird ein Gateway eingesetzt, erfolgt das Auslesen vorzugsweise durch einen Gateway-Administrator.

Ferner kann auch an eine kabelgebundene Übertragung gedacht sein. Das Stromnetz, Glasfaserleitungen und weitere Leitungen können ein Fernauslesen ermöglichen.

Jede Ausführungsform des vorstehend beschriebenen Zählers mit einer Schnittstelle für ein elektronisches Auslesen kann eine Einrichtung zur Ortsbestimmung umfassen. Diese kann ausgestaltet sein wie eingangs bereits beschrieben.

Die Einrichtung zur Ortsbestimmung und die Schnittstelle für ein elektronisches Auslesen können eingerichtet sein, um sowohl die Bestimmung des Standorts als auch das Fernauslesen der entnommenen Menge des Versorgungsgutes über das Mobilfunknetz zu erlauben.

Die vorliegende Erfindung schlägt ferner ein Verfahren zur Erfassung einer Menge eines aus einer Leitung entnommenen Versorgungsgutes wie beispielsweise Strom oder Wasser mittels eines Zählers vor, bei welchem eine Ortsbestimmung zur Bestimmung eines Standortes des Baustellenkastens durchgeführt wird.

Es kann daran gedacht sein, dass der im Wege der Ortsbestimmung bestimmte Standort des Baustellenkastens mit zumindest einem vorgegebenen Standort verglichen wird.

Dieser Vergleich kann beispielsweise dazu dienen, einen möglichen Missbrauch aufzudecken oder diesem vorzubeugen, falls dem Anschlussnehmer bekannt ist, dass eine Bestimmung des Standortes erfolgt, und er deshalb von einem Missbrauch absieht. Die Ortsbestimmung kann im Wesentlichen auf diejenige Weise und mit denjenigen Einrichtungen erfolgen, welche in Bezug auf die Einrichtung zur Ortsbestimmung vorstehend beschrieben sind.

Die vorliegende Erfindung schlägt weiterhin ein Verfahren zur Erfassung einer Menge eines aus einer Leitung entnommenen Versorgungsgutes wie beispielsweise Strom oder Wasser mittels eines Zählers vor, bei welchem die Menge des entnommenen Versorgungsgutes elektronisch ausgelesen wird.

Die Erfassung der Menge des entnommenen Versorgungsgutes umfasst hierbei sowohl ein Zählen, in der Regel führt der Zähler hierzu eine mathematische Integration durch, als auch ein Ablesen oder Auslesen eines Zählerstandes, beispielsweise des vom Zähler ermittelten Integrals.

Bei diesem Verfahren kann daran gedacht sein, die Menge des entnommenen Versorgungsgutes nicht nur elektronisch auszulesen, sondern die ausgelesenen Daten auch dem jeweiligen Zähler zuzuordnen. Beispielsweise können die ausgelesenen Daten neben Informationen über die entnommene Menge des Versorgungsgutes auch Informationen umfassen, welche den Zähler individualisieren. Somit kann beispielsweise eine Zuordnung der Daten zu einem bestimmten Anschlussnehmer erfolgen.

Es kann daran gedacht sein, im Rahmen des vorgenannten Verfahrens eine Ortsbestimmung zur Bestimmung eines Standortes des Baustellenkastens durchzuführen, wobei der im Wege der Ortsbestimmung bestimmte Standort des Baustellenkastens mit einer Vielzahl vorgegebener Standorte verglichen wird, wobei über den Vergleich des im Wege der Ortsbestimmung bestimmten Standorts mit den vorgegebenen Standorten ein Konto des Anschlussnehmers ermittelt wird, wobei die elektronisch ausgelesene Menge des entnommenen Versorgungsgutes dem ermittelten Konto zugeordnet wird.

Hierbei kann daran gedacht sein, die Menge des entnommenen Versorgungsgutes durch ein Fernauslesen auszulesen.

Baustellenkästen werden in aller Regel an einem bestimmten Anschluss installiert und dienen dazu, beispielsweise dem Messdienstleister die Rechnungsstellung an den zahlungspflichtigen Anschlussnehmer zu ermöglichen.

Die Zuordnung gemäss dem vorstehend beschriebenen Verfahren ermöglicht auf einfache Weise, eine Abrechnung durchzuführen, wobei stets sichergestellt ist, dass ein abzurechnender Verbrauch dem richtigen Anschlussnehmer zugeordnet wird. Diese Abrechnung kann beispielsweise durch einen Messdienstleister erfolgen.

Diese Varianten des vorstehend beschriebenen Verfahrens sind insbesondere für Messstellenbetreiber und Messdienstleister vorteilhaft. Die Arbeit des Messstellenbetreibers wird vereinfacht, da an eine Inbetriebnahme des Baustellenkastens geringere Anforderungen zu stellen sind als an die Inbetriebnahme bekannter Baustellenkasten, weil die korrekte Abrechnung mit Hilfe der Ortsbestimmung gewährleistet ist und der Messstellenbetreiber keine weiteren Massnahmen ergreifen muss, um die korrekte Abrechnung sicherzustellen.

Analoges gilt für einen Schutz vor Missbrauch, welcher durch die Ortsbestimmung bereitgestellt wird und um welchen sich der Messstellenbetreiber nicht weiter kümmern muss. Die Arbeit des Messdienstleisters wird beispielsweise durch das Fernauslesen vereinfacht.

Der im Wege der Ortsbestimmung bestimmte Standort sowie die im Wege des Fernauslesens bestimmte Menge des Versorgungsgutes können einem oder mehreren Erfassungssystemen zugeleitet werden. Der Standort und die Menge des Versorgungsgutes können hierbei demselben Erfassungssystem oder separaten Erfassungssystemen zugeleitet werden. Weiterhin kann daran gedacht sein, den Standort und/oder die Menge des Versorgungsgutes jeweils mehreren Erfassungssystemen zuzuleiten.

Im Rahmen der vorliegenden Erfindung wird unter einem Erfassungssystem jede Einrichtung verstanden, welche beispielsweise Informationen über den Standort und/oder die Menge des Versorgungsgutes empfangen kann. Diese Daten können im Erfassungssystem oder in einem mit dem Erfassungssystem verbundenen System weiterverarbeitet werden.

Das Erfassungssystem umfasst vorzugsweise zumindest eine Empfangseinrichtung und zumindest eine Einrichtung zur Datenverarbeitung. Die Einrichtung zur Datenverarbeitung kann, einzeln oder in Kombination, einer Rechnungsstellung bzw. Abrechnung oder allgemein einer Buchhaltung, einer Kundenbetreuung, einer Systemadministration oder dergleichen dienen.

Die Empfangseinrichtung kann beispielsweise zum Empfang von Daten über das Mobilfunknetz und/oder über Glasfaserleitungen und/oder über das Stromnetz eingerichtet sein. Die Einrichtung zur Datenverarbeitung kann eine beliebige Einrichtung zur Verarbeitung der empfangenen Daten sein.

Es kann daran gedacht sein, dass sowohl das Fernauslesen als auch die Bestimmung des Standortes über ein Mobilfunknetz erfolgen.

Es kann daran gedacht sein, den Baustellenkasten nicht nur mit Hilfe der Ortsbestimmung, sondern zusätzlich durch weitere Massnahmen zu individualisieren. Beispielsweise kann daran gedacht sein, über das Mobilfunknetz oder über Glasfaserleitungen oder über das Stromnetz nicht nur den Standort zu bestimmen, sondern auch den Zähler individualisierende Daten zu übermitteln, welche von dem Erfassungssystem erfasst und vorzugsweise weiterverarbeitet werden. Diese individualisierenden Daten können dazu dienen, den Zähler einem bestimmten Anschlussnehmer zuzuordnen. Diese Zuordnung kann einerseits komplementär zur Zuordnung durch den im Wege der Ortsbestimmung bestimmten Standort sein, und somit einer Überprüfung und Kontrolle oder einer Ausfallsicherung dienen. Andererseits kann es aber auch vorkommen, dass der Zähler im Wege der Ortsbestimmung nicht eindeutig einem Anschlussnehmer zugeordnet werden kann. In diesem Fall sind die individualisierenden Daten nötig, um eine solche Zuordnung sicherzustellen.

Erfolgt die Ortsbestimmung über Trilateration, beispielsweise mit Hilfe eines GPS-Empfängers, so ist zu beachten, dass die meisten GPS-Empfänger keine Sendefunktion umfassen. Zweckmässigerweise kann daher ein Sender vorgesehen sein, welcher den mit Hilfe des GPS-Empfängers ermittelten Standort zwecks Ortsbestimmung beispielsweise dem Erfassungssystem zuleitet.

Die vorliegende Erfindung schlägt ferner ein Verfahren zur Überwachung einer Entnahme eines Versorgungsgutes wie beispielsweise Strom oder Wasser aus einer Leitung vor, bei welchem ein Zähler zur Erfassung der Menge des Versorgungsgutes vorgesehen ist, wobei eine Ortsbestimmung zur Bestimmung eines Standortes eines Zählers durchgeführt wird.

Mit dem vorstehend beschriebenen Verfahren zur Überwachung kann festgestellt werden, ob der Zähler von einem Standort entfernt wurde, an welchem er beispielsweise vom Messstellenbetreiber installiert wurde.

Die vorliegende Erfindung kann die Inbetriebnahme und/oder den Betrieb eines Anschlusses für ein Versorgungsgut, beispielsweise eines Baustromanschlusses, erleichtern. Weiterhin kann sie die für die Inbetriebnahme erforderliche Zeit verkürzen sowie den Zeitaufwand verkürzen, welcher für den Betrieb nötig ist. So kann daran gedacht sein, dass beispielsweise der Messstellenbetreiber vorab, beispielsweise über ein Kontaktformular auf seiner Internetseite oder via E-Mail, über einen Standort des Baustellenkastens informiert wird. Beispielsweise kann ein Bauherr oder ein Bauunternehmer den Messstellenbetreiber vorab über die Adresse der Baustelle informieren, welche mit Baustrom versorgt werden soll. Weiterhin kann daran gedacht sein, sämtliche für einen Baustromanschluss gesetzlich vorgeschriebenen Prüfprotokolle und Dokumentationen zu erstellen.

Vorzugsweise wird daraufhin ein Baustromverteiler am gewünschten Standort aufgestellt, wobei der Baustromverteiler vorzugsweise bereits mit dem mobilen Baustromzähler ausgestattet ist. Daraufhin kann, beispielsweise von einem EVU, der Baustromanschluss in Betrieb genommen werden. Die von der vorliegenden Erfindung vorgeschlagenen Baustellenkasten sowie die Verfahren zur Überwachung und zur Erfassung kommen insbesondere bei Baustromanschlüssen sowie bei Bauwasseranschlüssen zum Einsatz. Im Gegensatz zu Hausanschlüssen, welche bei einer Errichtung eines Hauses gelegt und danach in der Regel über Jahrzehnte hinweg benutzt werden, dienen Baustromanschlüsse der Versorgung von temporären Einrichtungen und Gebäuden. Einerseits werden Baustrom- und Bauwasseranschlüsse während einer Bauphase benötigt, bevor die Hausanschlüsse gelegt sind. Die Baustrom- und Bauwasseranschlüsse liefern Strom und Wasser für sämtliche Arbeiten, welche bei der Errichtung des Gebäudes anfallen. Ferner werden Baustrom- und Bauwasseranschlüsse auch auf Jahrmärkten, Wochenmärkten und anderen temporären Veranstaltungen eingesetzt, um beispielsweise Marktstände, Zelte oder temporär errichtete Gebäude wie Hütten und dergleichen über einen gewissen Zeitraum hinweg mit Strom und Wasser zu versorgen.

Bei sämtlichen Baustellenkästen gemäss der vorliegenden Erfindung kann daran gedacht sein, ein Gehäuse vorzusehen, in welchem zumindest einige der Bestandteile des Baustellenkastens angeordnet sind, um diesen vor Vandalismus und/oder Manipulation und/oder Witterung zu schützen.

Bei sämtlichen Baustellenkasten gemäss der vorliegenden Erfindung kann daran gedacht sein, die Menge des zu erfassenden Versorgungsgutes in verschiedenen physikalischen Einheiten zu zählen bzw. zu erfassen. Der mobile Bauwasserzähler wird einen Wasserverbrauch vornehmlich in Kubikmetern erfassen. Der Zähler kann den Stromverbrauch bzw. den Verbrauch elektrischer Energie beispielsweise durch Erfassung des Stroms, der Spannung oder der Leistung erfassen, wobei Wirk- und Blindleistung bzw. Wirk- und Blindarbeit zu beachten sind.

Sämtliche Zähler gemäss der vorliegenden Erfindung können mit einem Speicher zur Speicherung der erfassten Mengen des Versorgungsguts ausgestattet sein.

Ein erfindungsgemässer Baustellenkasten zur Erfassung einer Menge eines aus einer Leitung entnommenen Versorgungsgutes in Form von Strom oder Wasser, weist eine Schnittstelle zur Anbindung einer Einrichtung zur Ortsbestimmung zur Bestimmung eines Standortes des Baustellenkastens auf.

Ausserdem weist der Baustellenkasten die Einrichtung zur Ortsbestimmung auf, welche zur Bestimmung des Standortes des mobilen Baustellenkastens dient.

Die Einrichtung zur Ortsbestimmung ist derart eingerichtet, dass die Bestimmung des Standorts des mobilen Baustellenkastens auf zumindest eine der folgenden Arten ermöglicht wird:
- Bestimmung mittels mehrere verteilter Empfänger, deren Standort bekannt ist, beispielsweise Mobilfunkmasten eines Mobilfunknetzes,
- Bestimmung über Trilateration, beispielsweise durch ein Satellitensystem zur Positionsbestimmung.

Der Baustellenkasten weist eine Schnittstelle für ein elektronisches Auslesen auf, welche ein elektronisches Auslesen der entnommenen Menge des Versorgungsgutes erlaubt.

Die Schnittstelle für ein elektronisches Auslesen ist derart eingerichtet, dass ein Fernauslesen der entnommenen Menge des Versorgungsgutes möglich ist.

Der Baustellenkasten weist eine Einrichtung zur Ortsbestimmung auf.

Die Einrichtung zur Ortsbestimmung und die Schnittstelle für ein elektronisches Auslesen sind derart eingerichtet, um sowohl die Bestimmung des Standorts als auch das Fernauslesen der entnommenen Menge des Versorgungsgutes über das Mobilfunknetz zu erlauben.

Ein Verfahren zur Erfassung einer Menge eines aus einer Leitung entnommenen Versorgungsgutes wie beispielsweise Strom oder Wasser mittels eines Baustellenkastens, ist derart ausgebildet, dass eine Ortsbestimmung zur Bestimmung eines Standortes des mobilen Baustellenkastens durchgeführt wird.

Der im Wege der Ortsbestimmung bestimmte Standort des mobilen Baustellenkastens wird mit zumindest einem vorgegebenen Standort verglichen.

Die Menge des entnommenen Versorgungsgutes wird elektronisch ausgelesen.

Eine Ortsbestimmung zur Bestimmung eines Standortes des mobilen Baustellenkastens wird derart durchgeführt, dass der im Wege der Ortsbestimmung bestimmte Standort des mobilen Baustellenkastens mit einer Vielzahl vorgegebener Standorte verglichen wird, wobei über den Vergleich des im Wege der Ortsbestimmung bestimmten Standorts mit den vorgegebenen Standorten ein Konto eines Anschlussnehmers ermittelt wird, wobei die elektronisch ausgelesene Menge des entnommenen Versorgungsgutes dem ermittelten Konto zugeordnet wird.

Die Menge des entnommenen Versorgungsgutes kann durch ein Fernauslesen ausgelesen werden, sowie Intern gespeichert werden.

Das Fernauslesen als auch die Bestimmung des Standortes erfolgt über ein Mobilfunknetz.

Das Verfahren zur Überwachung einer Entnahme eines Versorgungsgutes wie beispielsweise Strom oder Wasser aus einer Leitung, wobei ein mobiler Baustellenkasten zur Erfassung der Menge des Versorgungsgutes vorgesehen ist, wird dadurch ermöglicht, dass eine Ortsbestimmung zur Bestimmung eines Standortes eines mobilen Baustellenkastens durchgeführt wird.

### Figurenbeschreibung

Weitere Vorteile, Merkmale und Einzelheiten der Erfindung ergeben sich aus der Beschreibung der Figuren. Diese zeigen in
Figur 1 ein erstes Ausführungsbeispiel eines erfindungsgemäßen Baustellenkastens;
Figur 2 ein weiteres Ausführungsbeispiel des erfindungsgemäßen Baustellenkastens.

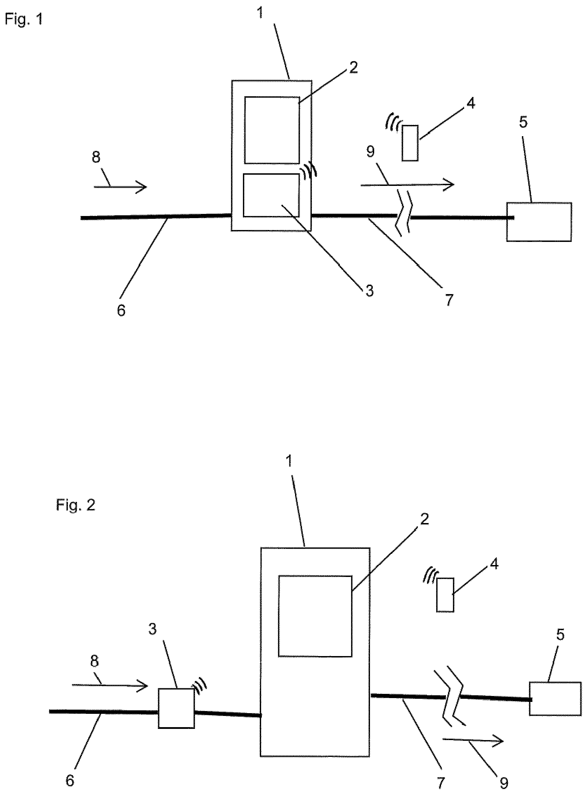

In Figur 1 ist ein Baustellenkasten 1 gezeigt. In dem in Figur eins gezeigten ersten Ausführungsbeispiel ist ein Zähler 2 und ein Kommunikationsmodul 3 in dem Baustellenkasten 1 angeordnet. Das Kommunikationsmodul 3 ist über Funk oder Mobilnetz mit einer Mobilfunkvorrichtung 4 verbunden.

Das Kommunikationsmodul 3 erfasst beispielsweise Ort, Zeit und Datum, sowie den dazugehörigen Zählerstand und sendet diese Daten an die Mobilfunkvorrichtung 4.

Außerdem ist eine Versorgungsleitung 6 gezeigt. Die Versorgungsleitung 6 ist einends mit einer nicht näher gezeigten Strom- oder Wasserquelle und andernends mit dem Baustellenkasten 1 bzw. mit dem Zähler 2 wirkverbunden. Das bedeutet, das Strom oder Wasser aus der Versorgungsleitung 6 durch den Zähler 2 erfasst wird. Der Zähler 2 ist fest in dem Baustellenkasten 1 angebracht. Üblicherweise werden bei Baustellenkästen die Zähler vom Versorger eingebaut und nach der Beendigung der Baustelle wieder ausgebaut. Diese ein-und Ausbau verursacht große Kosten, die durch diese Erfindung abgestellt werden sollen. Fest eingebaut bedeutet, dass der Zähler 2 üblicherweise so lange in dem Baustellenkasten 1 verbleibt, wie der Baustellenkasten 1 genutzt wird. Das wiederum würde dazu führen, dass der Versorger lediglich noch für die Verbindung der Versorgungsleitung 6 mit dem Zähler 2 sorgen müsste.

Weiter ist eine Entnahmeleitung 7 gezeigt, welche einends mit einer Abnahmestelle 5 bzw. einem Verbraucher verbunden ist. Weiter ist eine erste Flussrichtung 8 gezeigt, welche andeuten soll in welche Richtung der Strom bzw. das Wasser in der Versorgungsleitung 6 fließt. Daneben ist auch eine zweite Flussrichtung 9 gezeigt, welche anzeigt, in welche Richtung der Strom bzw. das Wasser nach dem Baustellenkasten 1 fließt.

Die Figur 2 zeigt ein weiteres Ausführungsbeispiel erfindungsgemäßen Idee. Dort ist das Kommunikationsmodul 3 außerhalb des Baustellenkastens 1 an der Versorgungsleitung 6 angebracht. Ansonsten kann die Beschreibung der Figur 1 auch auf die Figur 2 gelesen werden. Dies gilt insbesondere dann, wenn in der Figur 2 die gleichen Bezugsziffern verwendet wurden, wie dies in der Figur 1 der Fall war.

### Positionszahlenliste

1. Baustellenkasten
2. Zähler
3. Kommunikationsmodul
4. Mobilfunkvorrichtung
5. Abnahmestelle / Verbraucher
6. Versorgungsleitung
7. Entnahmeleitung
8. erste Flussrichtung
9. zweite Flussrichtung

## Patentansprüche

1. Baustellenkasten (1) zur Erfassung einer verbrauchten Menge an Strom- oder Wasser mit einem Anschluss für eine Versorgungsleitung (6) und einer Entnahmeleitung (7)
**dadurch gekennzeichnet, dass**
ein fest integrierter Zähler (2) und ein Kommunikationsmodul (3) vorhanden sind.

2. Baustellenkasten (1) nach Anspruch 1, **dadurch gekennzeichnet, dass** das Kommunikationsmodul (3) über Funk oder Mobilnetz mit einer Mobilfunkvorrichtung (4) kommuniziert, wobei die Mobilfunkvorrichtung (4) eine Ortungseinheit aufweist.

3. Baustellenkasten (1) nach einem der vorigen Ansprüche, **dadurch gekennzeichnet, dass** das Kommunikationsmodul (3) mit dem Zähler (2) wirkverbunden ist und den Stand des Zählers (2) übernehmbar und an die Mobilfunkvorrichtung (4) übermittelbar ist.

4. Baustellenkasten (1) nach einem der vorigen Ansprüche, **dadurch gekennzeichnet, dass** das Kommunikationsmodul (3) den Standort des Baustellenkastens (1) ermittelt und an die Mobilfunkvorrichtung (4) übermittelt.

5. Baustellenkasten (1) nach einem der vorigen Ansprüche, **dadurch gekennzeichnet, dass** das Kommunikationsmodul (3) in dem Baustellenkasten (1) oder ausserhalb des Baustellenkastens (1) angebracht ist.

6. Baustellenkasten (1) nach einem der vorigen Ansprüche, **dadurch gekennzeichnet, dass** die Versorgungsleitung (6) einends mit einer Stromquelle und andernends mit dem Zähler (2) verbunden ist.

7. Baustellenkasten (1) nach einem der vorigen Ansprüche, **dadurch gekennzeichnet, dass** die Entnahmeleitung (7) einends mit dem Zähler (2) und andernends mit einer Abnahmestelle (5) oder einem Verbraucher verbunden ist.

8. Computerprogrammprodukt zur Abrechnung für einen Baustellenkasten (1) nach einem der vorigen Ansprüche 1 bis 7 **gekennzeichnet durch** folgende Schritte:
- der Zähler (3) erfasst die verbrauchte Menge von Strom und Wasser;
- der Zähler (3) übermittelt die verbrauchte Menge an das Kommunikationsmodul (2);
- das Kommunikationsmodul (3) übermittelt die verbrauchte Menge und den Standort des Zählers (2), sowie das Datum und die Uhrzeit an einen mit der Mobilfunkvorrichtung (4) verbundenen Rechner;
- der Rechner errechnet einen Rechnungsbetrag, wobei die Mobilfunkvorrichtung (4) auf die verbrauchte Menge zur Ermittlung des Rechnungsbetrages zurückgreift;
- der Rechner bestimmt aufgrund der Ortsbestimmung des Zählers (3), sowie Ort, Datum und Zeit einen Rechnungsempfänger;
- der Rechner erstellt eine Rechnung mit dem Rechnungsbetrag und dem Rechnungsempfänger und druckt die Rechnung auf Papier oder digital aus.
